## Europäisches Patentamt

## European Patent Office

## Office européen des brevets

(11) Veröffentlichungsnummer: **0 134 495**
**B1**

## EUROPÄISCHE PATENTSCHRIFT

(45) Veröffentlichungstag der Patentschrift:
**23.11.88**

(51) Int. Cl.⁴: **C 08 F 8/30, C 08 F 8/32**

(21) Anmeldenummer: **84108184.7**

(22) Anmeldetag: **12.07.84**

(54) Verfahren zur Herstellung lagerstabiler hydrazinfreier Lösungen oder Dispersionen von organischen Hydrazinderivaten und deren Verwendung.

(30) Priorität: **19.07.83 DE 3325896**

(43) Veröffentlichungstag der Anmeldung:
**20.03.85 Patentblatt 85/12**

(45) Bekanntmachung des Hinweises auf die Patenterteilung:
**23.11.88 Patentblatt 88/47**

(84) Benannte Vertragsstaaten:
**AT BE DE FR GB IT NL**

(56) Entgegenhaltungen:
**DE-B-1 046 887**
**DE-C-709 638**
**DE-C-921 891**
**FR-A-1 437 803**
**FR-A-1 525 504**
**GB-A-1 222 929**

(73) Patentinhaber: **BASF Aktiengesellschaft, Carl-Bosch- Strasse 38, D-6700 Ludwigshafen (DE)**

(72) Erfinder: **Blum, Rainer, Bannwasserstrasse 58, D-6700 Ludwigshafen (DE)**
Erfinder: **Buensch, Helmut, Dr., Panoramastrasse 81, D-6906 Leimen (DE)**
Erfinder: **Jacobi, Manfred, Dr., Heidelberger Ring 32 b, D-6710 Frankenthal (DE)**
Erfinder: **Osterloh, Rolf, Dr., Am Wehrhaus 16 a, D-6718 Gruenstadt (DE)**

LIBER, STOCKHOLM 1988

## Beschreibung

Die Vorliegende Erfindung betrifft ein Verfahren zur Herstellung lagerstabiler hydrazinfreier Lösungen und Dispersionen von Hydrazinderivaten organischer Verbindungen und deren Verwendung.

Der Wunsch, Hydrazide bzw. Polyhydrazide und andere polymere Hydrazinabkömmlinge wegen ihrer vielfältigen Reaktionsmöglichkeiten technisch einzusetzen, z. B. für Klebe- und Dichtungsmittel oder dekorative und schützende Überzüge u.v.a., wird deutlich durch eine Reihe von Patentanmeldungen und Druckschriften, welche Herstellung und Verwendung polymere Hydrazide beschreiben.

In der US-PS-3 876 606 werden z. B. Epoxidpulverlacke, die mit Hydraziden vernetzt werden, und eine vorteilhafte Pigmentmischung für solche Pulverlacke beschrieben.

In der US-PS-4 171 413 wird die Herstellung von Polyacrylathydraziden beschrieben und auf die Schwierigkeit hingewiesen, hydrazinfreie Polyacrylhydrazide durch Umsetzung von Polyacrylaten mit Hydrazin zu erhalten, da bei hoher Temperatur, die für eine möglichst vollständige Umsetzung notwendig ist, die Produkte vorzeitig gelieren.

In der EP-A-0 003 516 werden wäßrige Polyacrylatdispersionen beschrieben, die in der Wasserphase wasserlösliche Hydrazide sowie einen Zusatz von Schwermetallionen enthalten. Der Zusatz von Schwermetallionen verhindert, daß sich aus den Hydraziden freies Hydrazin bildet. Die eingesetzten Hydrazide müssen hydrazinfrei sein. Methoden, hydrazinfreie Hydrazide oder hydrazinfreie Hydrazidlösungen zu erhalten, werden nicht angegeben.

Trotz der in diesen Schriften genannten Vorteile der Verwendung von Hydraziden und Polyhydraziden bzw. polymeren Hydrazidabkömmlingen haben solche Produkte nur wenig technische Verwendung gefunden.

Der Haupthinderungsgrund ist darin zu sehen, daß Hydrazin hochgiftig und krebserzeugend ist, d.h. für eine technische Verwendung, ohne extreme und teure Sicherheitsvorkehrungen, darf in solchen Produkten kein freies Hydrazin mehr vorhanden sein.

Ein weiterer Hinderungsgrund, der der Verwendung von polymeren Polyhydraziden und monomeren Polyhydraziden aus Lösungen, besonders auf dem Gebiet der Überzugs-, Verklebungs- und Dichtungsmittel entgegensteht, ist die Neigung solcher Lösungen, auf Grund von Wasserstoffbrückenbindungen oder anderen Selbstvernetzungsreaktionen zu gelieren oder bei Lagerung ihre Viskosität in einem anwendungstechnisch nicht mehr tolerierbaren Ausmaß zu erhöhen.

Aufgabe der vorliegenden Erfindung ist es, ein Verfahren zur Herstellung lagerstabiler hydrazinfreier Lösungen bzw. Dispersionen aufzuzeigen.

Gegenstand der vorliegenden Erfindung ist also ein Verfahren zur Herstellung lagerstabiler hydrazinfreier Lösungen oder Dispersionen von organischen Hydrazinderivaten, das dadurch gekennzeichnet ist, daß

(A) organische Verbindungen, die mehr als eine der Hydrazinolyse zugängliche Estergruppe aufweisen, mit

(B) Hydrazin und/oder Hydrazinhydrat bei Temperaturen von 50 bis 200° C in

(C) organischen Lösemitteln umgesetzt werden und das resultierende Reaktionsprodukt mit

(D) Monoketonen und/oder Monoaldehyden eines Siedebereichs (bei Normaldruck) von 30 bis 250° C umgesetzt wird.

Als Komponente (A) können beispielsweise sowohl Polyalkyl-, bzw. Poly-(hydroxyalkyl)-ester von Alkanolen oder Alkandiolen mit 1 bis 4 C-Atomen, Ester primärer Alkanole bzw. Alkandiole, Acrylester- und/oder Methacrylester(co)polymerisate, Ester monomerer organischer Polycarbonsäuren, Polyester auf Basis von Polycarbonsäuren und Polyolen, Polyester monomerer Polycarbonsäuren und/oder oligomerer höherer Fettsäuren, sowie derartige organische Verbindungen, die zusätzlich mit Ammoniak oder Monoamin neutralisierte oder teilneutralisierte Carboxylgruppen enthalten, verwendet werden.

Gegenstand der vorliegenden Erfindung ist außerdem die Verwendung der erfindungsgemäß hergestellten Lösungen von organischen Hydrazinderivaten als kontinuierliche Phase einer Dispersion organischer Polymerer sowie als Vernetzungsmittel für Überzugs-, Verklebungs- und Dichtungsmittel.

Nach dem Verfahren gemäß der vorliegenden Erfindung gelingt es überraschenderweise, lagerstabile Lösungen bzw. Dispersionen von Polyhydraziddderivaten und polymeren Polyhydraziddderivaten zu erhalten, die hydrazinfrei sind und trotzdem die, soweit es die Anwendung aus Lösungen betrifft, die in der zitierten Literatur genannten und weitere dem Fachmann bekannte, für Polyhydrazide typischen Vernetzungsfunktionen besitzen, insbesondere für die Anwendung auf dem Gebiet der Beschichtungs-, Verklebungs- und Dichtungsmittel.

Die erfindungsgemäß hergestellten lagerstabilen Lösungen lassen sich z. B. bei einer typischen Verwendung als Härter für Epoxidlacke für die Beschichtung von Industriefußböden einsetzen, wobei besondere Schutzmaßnahmen für die Verarbeiter, über die für Lacke üblichen hinaus, nicht notwendig sind. Vernetzerlösungen, die noch freies Hydrazin enthalten, sind für solche Zwecke z. B. nicht anwendbar.

Soweit in der Literatur das Problem des freien Hydrazins in Zubereitungen für das Gebiet der Beschichtungs-, Verklebungs- und Dichtungsmittel überhaupt erwähnt wird, handelt es sich um Hinweise darauf, daß Hydrazin giftig ist und der Gehalt an freiem Hydrazin klein gehalten werden soll. In der US-PS-4 171 413 wird

eine destillative Methode vorgeschlagen, mit der in Hydrazinolyseprodukten von Polyacrylestern ein Resthydrazingehalt von unter 1 % erreicht werden soll.

Wegen des vermuteten cancerogenen Potentials des Hydrazins kann ein Resthydrazingehalt überhaupt für viele Anwendungsgebiete nicht akzeptiert werden.

In der EP-A-0 003 516 wird die Verwendung hydrazinfreier Hydrazide gefordert, ohne die Rerstellung derselben anzugeben; es wird davon ausgegangen, daß diese hydrazinfrei sind.

Die Herstellung hydrazinfreier Hydrazide nach den allgemein bekannten Methoden der präparativen Chemie, z. B. durch Umfällen oder Umkristallisieren ist sehr kostenaufwendig und für die auf dem Gebiet der Beschichtungs-, Verklebungs- und Dichtungsmittel häufig gewünschten, harzartigen Polyhydrazide meistens nicht anwendbar.

Das erfindungsgemäße Verfahren hingegen führt auf einfache und kostengünstige Weise zu hydrazinfreien Lösungen bzw. Dispersionen von Polyhydraziden oder polymeren Polyhydraziden von für Beschichtungs-, Verklebungs- und Dichtungsmittel besonders geeignetem chemischen Aufbau.

Zu den für das erfindungsgemäße Verfahren zu verwendenden Einsatzstoffen ist im einzelnen folgendes auszuführen:

(A) Die Einsatzstoffe (A) sind organische Verbindungen mit mehr als einer der Hydrazinolyse zugänglichen Estergruppe. Verbindungen dieser Art sind z. B. (Meth)acrylester-(co)polymerisate, wobei die Zusammensetzung der (Co)polymerisate weitgehend nach dem späteren Verwendungszweck erfolgen kann; es muß lediglich sichergestellt sein, daß ausreichend viele der Hydrazinolyse zugängliche Estergruppen enthalten sind, bevorzugt solche, die leicht hydrazinolysierbar sind, z. B. die (Meth)acrylester von unverzweigten Alkanolen mit 1 bis 4 C-Atomen und die Mono-(meth)acrylester von Alkandiolen mit 1 bis 4 C-Atomen, besonders bevorzugt Methyl-, Ethyl-, und Hydroxyethylester.

Ester der genannten Art werden leichter hydrazinolysiert, als z. B. die Ester höherer und/oder verzweigter Alkanole oder Alkandiole und sind deshalb allgemein bei der Auswahl der Verbindungen mit mehr als einer der Hydrazinolyse zugänglichen Estergruppen bevorzugt. Einsatzstoffe (A) aus der Klasse der Copolymerisate können ferner einpolymerisiert enthalten: olefinisch ungesättigte Säuren; geeignet sind z. B. Mono- und Dicarbonsäuren mit 3 bis 6 C-Atomen sowie die Halbester der Dicarbonsäuren von Alkoholen mit 1 bis 20 C-Atomen, daneben olefinisch ungesättigte Sulfonsäuren oder Phosphonsäuren. Bevorzugt verwendet man (Meth)acrylsäure, Crotonsäure, Maleinsäure, Fumarsäure, Monomethyl-, butyl-, -2-ethylhexyl- oder auch Stearylmaleinat. Diese Säuren können schon vor der Polymerisation mit Monoaminen und/ oder Ammoniak neutralisiert sein. Es ist zweckmäßig, die Neutralisation nach der Copolymerisation und vor der Umsetzung mit Hydrazin bzw. Hydrazinhydrat durchzuführen.

Einsatzstoffe (A) aus der Klasse der Copolymerisate können gegebenenfalls auch zusätzlich zu den oben beschriebenen Säuren, basische Monomere einpolymerisiert enthalten: dazu gehören besonders olefinisch ungesättigte Verbindungen mit tertiären Aminogruppen, wie Dimethylaminoethyl-(meth)acrylamid und -(meth)acrylat, Dimethyl- und Diethylaminoethylvinylether, N-Vinylimidazol, N-Vinylimidazolin, Vinylpyridin, aber auch N-substituierte Amide wie Mono- und Dialkyl(meth)acrylamid, N-Vinylformamid, N-Vinylpyrrolidon und N-Vinylcaprolactam oder deren Gemische.

Es ist zweckmäßig und in vielen Fällen bevorzugt, solche Copolymerisate zu verwenden, die neben leichter hydrazinolysierbaren Estergruppen und ggf. sonstigen funktionellen Gruppen, auch schwerer hydrazinolysierbare oder hydrazinolysebeständige Estergruppen enthalten.

Prinzipiell sind für das erfindungsgemäße Verfahren alle in organischen Lösungsmitteln löslichen oder darin dispergierbaren Copolymerisate geeignet, sofern sie hydrazinolysierbare Estergruppen enthalten. Dazu gehören Copolymerisate der (Meth)acrylsäureester von Alkoholen mit 1 bis 20 C-Atomen wie Methyl-, Ethyl-, Propyl-, n-, i- und t-Butyl-, Cyclohexyl-, 2-Ethylhexyl-, Decyl-, Lauryl- und Stearyl(meth)acrylat, mit z. B. Vinylestern von 1 bis 20 C-Atome enthaltenden Carbonsäuren wie Vinylformiat, -acetat, -propionat, -butyrat, -laurat und -stearat, Vinylethern mit 3 bis 22 C-Atomen wie Methyl-, Ethyl-, Butyl-, Hexyl-, Octadecylvinylether, Vinylaromaten mit 8 bis 12 C-Atomen wie Styrol, Methylstyrol, Vinyltoluole, t-Butylstyrol, Halogenstyrole, Olefinen mit 2 bis 20 C-Atomen wie Ethylen, Propylen, n- und i-Butylen, Diisobuten, Triisobuten, Oligopropylene, Vinylhalogeniden wie Vinylchlorid, -bromid und Vinylidenchlorid, Allylethern, Allylalkoholen und/oder Allylestern.

Die Copolymerisate (A) weisen in der Regel K-Werte nach DIN 53 726 (1 %-ig in THF) von 10 bis 100 auf.

Weitere der Hydrazinolyse zugängliche Verbindungen sind z. B. die Ester monomerer organischer Polycarbonsäuren mit Monoalkanolen, insbesondere mit geradkettigen 1 bis 10 Kohlenstoffatome enthaltenden Alkanolen oder Monoestern von Alkandiolen mit 2 bis 6 Koblenstoffatomen wie z. B. derartige Ester der Phthalsäure, Adipinsäure, Sebacinsäure, Äpfelsäure, Korksäure, Trimellithsäure oder Bernsteinsäure, weiter die Ester oligomerer höherer Fettsäuren, insbesondere oligomerer Leinölfettsäure, und/oder Ricinenfettsäure, besonders solche mit einem Oligomerisierungsgrad von 2 bis 6, lineare oder verzweigte Polyester, die aus der Polyveresterung von monomeren Polycarbonsäuren, monomeren Polycarbonsäureanhydriden bzw. Polycarbonsäureteilestern und oligomeren höheren Fettsäuren mit Polyalkoholen oder der Umesterung von Monoalkoholestern der genannten Säuren mit Polyalkoholen erhalten werden.

Eine weitere Gruppe bevorzugter Verbindungen (A) sind Polyester, die endständig leicht hydrazinolysierbare Estergruppen aufweisen und z. B. erhalten werden durch Umesterung von Phthalsäuredimethylester, Adipinsäurediethylester, Phthalsäuremonopropylester, Maleinsäure(halb)ester oder Malonsäure(halb)ester mit einem Gemisch aus Hexandiol und Trimethylolpropan, wobei diese Umesterungspolyole in einem Unterschuß bezogen auf die eingesetzten Methylestergruppen verwendet werden.

Die hier genannten Ester sollen als Beispiele verdeutlichen, was Verbindungen mit mehr als einer, der Hydrazinolyse zugänglichen Estergruppen, im Sinne der Erfindung sind, ohne die Erfindung auf die Verwendung der genannten Verbindungen zu beschränken. Die Herstellverfahren für geeignete Ester sind nicht Gegenstand der Erfindung.

Die Umsetzung der Verbindungen (A) mit (B) Hydrazin und/oder Hydrazinhydrat kann nach allgemein bekannten Methoden erfolgen, z. B. nach Rouben-Weyl, Methoden der organischen Chemie, Georg Thieme Verlag Stuttgart, Band 8, Seiten 676 ff ., Band 10/2, Seiten 1 ff und 127 ff.

Die Verbindungen (A) sind dabei im allgemeinen in einem organischen Lösemittel (C) gelöst. Die Menge an Lösemittel (C) richtet sich dabei häufig nach der Viskosität der Lösung und wird so gewählt, daß eine gut handhabbare Konsistenz erhalten wird. Ein weiteres Auswahlkriterium für die Lösemittel (C) ist der Siedepunkt der nicht unter ca. 60°C liegen sollte, weil sonst die Umsetzung mit Hydrazin und/oder Hydrazinhydrat in einem geschlossenen Reaktor unter Druck durchgeführt werden muß. Geeignete Lösemittel für Verklebungs-, Dichtungs- und Beschichtungsmittel werden z. B. von H. Kittel in "Lehrbuch der Lacke und Beschichtungen" Band III 3.7. angegeben (Verlag W.A. Colomb. 1976).

Wenn die Verbindung (A) eine Flüssigkeit von geeigneter Viskosität ist und der Umsatz mit Hydrazin und/oder Hydrazinhydrat nicht vollständig erfolgen soll, kann auch ein Überschuß an (A) als Lösemittel dienen.

Gegebenenfalls können auch während der Umsetzung weitere Lösemittel zugegeben werden.

Eine bevorzugte Verfahrensweise der Umsetzung von (A) mit (B) in (C) besteht darin, die Verbindungen (A) in dem Lösemittel (C) zu lösen, das Hydrazin und/oder Hydrazinhydrat zuzugeben und solange auf 50 bis 200°C, vorzugsweise 80 bis 160°C zu erwärmen, bis die Aminzahl auf etwa die Hälfte des Anfangswertes gesunken ist. Die eingesetzte Menge an Hydrazin und/oder Hydrazinhydrat richtet sich dabei im allgemeinen nach der gewünschten Reaktivität des Endproduktes und den in (A) vorhandenen der Hydrazinolyse zugänglichen Estergruppen. Es kann soviel Hydrazin und/oder Hydrazinhydrat verwendet werden, wie den Estergruppen äquivalent ist, oder ein Unter-, bzw. Überschuß. Wenn ein großer Überschuß verwendet wird, ist es zweckmäßig nach Beendigung der Umsetzung Resthydrazin abzudestillieren. Hydrazinfreie Produkte lassen sich so jedoch nicht herstellen, weil die Produkte bei den dazu notwendigen scharfen Bedingungen vernetzen. Ein wesentlicher Vorteil des erfindungsgemäßen Verfahrens ist es, daß bei der Umsetzung die Reaktion nicht bis zum hydrazinfreien Umsatz geführt werden muß, bzw. ein eventuell vorhandener großer Überschuß nicht vollständig destillativ entfernt werden muß.

Hydrazinfreie Produkte gemäß der vorliegenden Erfindung werden dadurch erhalten, daß die Umsetzungsprodukte von (A) mit (B) in (C) weiter umgesetzt werden mit Komponente (D), Monoaldehyden und/oder Monoketonen eines Siedebereichs von 30 bis 250°C.

Als Komponente (D) kommen ein oder mehrere Ketone und/oder Aldehyde mit Siedepunkten von 30°C bis 200°C in Frage. Dazu gehören aliphatische, cycloaliphatische, aromatische und araliphatische Ketone und Aldehyde. Als Beispiele seien genannt Acetaldehyd, Propionaldehyd, Butyraldehyd, Benzaldehyd, Phenylacetaldehyd sowie Terpenaldehyde, wobei die Verwendung von Aldehyden wegen ihres unangenehmen Geruchs, ggf. ihrer Toxizität weniger bevorzugt ist.

Geeignete Ketone sind z. B. Dialkylketone wie Aceton, Methylethylketon, Diethylketon, i-Propylmethylketon, n-Propylmethylketon, Di-i- und Di-n-propylketon, t-Butylmethylketon, i-Butylmethylketon, sec-Butylmethylketon, Diisobutylketon, cycloaliphatische Ketone wie Cyclohexanon, aromatisch-aliphatische Ketone wie Acetophenon. Bevorzugt werden Dialkylketone mit Siedepunkten von 50 bis 150°C verwendet.

Um lagerstabile, hydrazinfreie Lösungen zu erhalten, ist es notwendig, (D) in einer Menge anzuwenden, die der, nach der Umsetzung mit Hydrazin und/oder Hydrazinhydrat resultierenden Aminzahl äquivalent ist. Bevorzugt wird jedoch (D) im allgemeinen in einem erheblichen Überschuß verwendet.

Es ist in vielen Fällen zweckmäßig, nach der Umsetzung mit Hydrazin und/ oder Hydrazinhydrat weiteres Lösemittel zuzugeben; in vielen Fällen ist es möglich, jedoch nicht notwendig, Ketone und/oder Aldehyde der Gruppe (D) als Lösemittel ohne Zusatz anderer Lösemittel zu verwenden.

In der Regel verwendet man jedoch zusätzliche Lösemittel eines Siedebereichs von 30 bis 200°C. Dazu gehören Wasser, übliche organische Lösemittel, z. B. Alkohole wie Methanol, Ethanol, n- und i-Propanol, n-, i- und t-Butanol, Amylalkohole, Cyclohexanol, Ester, wie Methyl-, Ethyl-, Propyl-, Butylformiat und -acetat, Ether wie Diethyl-, Dibutyl-, Dipropylether, Tetrahydrofuran, Dioxan, Glykole wie Ethylenglykol, Propylenglykol, Butandiole, Glykolether wie Methyl-, Ethyl-, Butyl-, Dimethyl-, Diethyl-, Dibutylglykol, Diglykoldiethylether, Diglykoldimethylether, Diglykolmonomethylether, Diglykolmonomethylether, Glykolester wie Glykol(di)acetat, Etherester wie Methyl- und Ethylglykolacetat, aromatische Kohlenwasserstoffe wie Benzol, Toluol, Xylole, Ethylbenzol, Butylbenzole und Halogenbenzole, daneben Benzine des genannten Siedebereichs sowie Alkane, z. B. Pentan, Hexan, Heptan, Octan oder auch Dimethylformamid.

Die erfindungsgemäßen hydrazinfreien, lagerstabilen Lösungen eignen sich als Vernetzer für Beschichtungen, Verklebungen und Dichtungen, z. B. in Kombinationen mit Epoxidharzen, carbonylgruppenterminierten Polyacrylaten oder Polyurethanen und Polyisocyanaten. Die erfindungsgemäßen, hydrazinfreien lagerstabilen Lösungen können aber auch für sich allein als Beschichtungs-, Verklebungs- und Dichtungsmittel verwendet werden, hierfür besonders geeignet sind Lösungen, die von harzartigen polymeren Verbindungen (A) ausgehen. Diese zeigen nach dem Verdampfen der Lösemittel sehr gute Haftung auf den verschiedensten Substraten und sind gut geeignet zur Herstellung von Verklebungsmitteln.

Die folgenden Beispiele sollen die Erfindung verdeutlichen, ohne sie auf diese Beispiele zu beschränken.

Die in den Beispielen angegebenen Teile und Prozente beziehen sich auf das Gewicht. Die Bestimmung der K-Werte erfolgte nach dem von H. Fikentscher, Cellulosechemie 12 (1932), Seite 28 ff, bzw. DIN 53 726 angegebenen Verfahren aus 1 %-iger Lösung in Tetrahydrofuran.

**Beispiel 1**

In einem Dreihalsrührkolben mit Rückflußkühler und Tropftrichter werden 300 Teile Toluol vorgelegt und bei 105°C eine Lösung von 100 Teilen Methylacrylat, 50 Teilen Ethylacrylat, 100 Teilen Ethylhexylacrylat, 50 Teilen Methylmethacrylat und 6 Teilen tert.-Butylperbenzoat in 3 Stunden zugetropft. Es wird noch 1 Stunde bei 100 bis 105°C nachpolymerisiert. Dann werden sofort 60 Teile Hydrazinhydrat durch den Rückflußkühler zugegeben und 3 Stunden bei 95 bis 100°C gerührt. Dabei sinkt die Aminzahl von zunächst 161 auf 87 ab.

Die Heizung wird abgestellt und, nachdem die Temperatur auf ca. 60°C abgesunken ist, werden über den Rückflußkühler 440 Teile Aceton zugegeben, 1 Stunde bei 50°C weitergerührt und dann auf Raumtemperatur abgekühlt. Die resultierende leicht trübe Lösung hat einen Einbrennrückstand von 31 % und ist bei Raumtemperatur mindestens 3 Monate lagerstabil. Freies Hydrazin kann gaschromatographisch nicht nachgewiesen werden. Die so erhaltenen Polymerbestandteile weisen einen K-Wert von 29 auf.

Vergleichsbeispiel A

Es wird wie in Beispiel 1 verfahren, aber statt Aceton wird Isobutanol zugegeben. Die resultierende Lösung enthält noch 0,8 % freies Hydrazin. Bei Lagerung bei Raumtemperatur bildet die Lösung nach 2 Wochen ein hochviskoses Gel.

Vergleichsbeispiel B

Es wird wie bei Beispiel 1 verfahren. Wenn die Aminzahl auf 87 abgesunken ist, werden über einen Destillationsaufsatz 100 Teile Destillat aus dem Kolben entnommen, die Temperatur steigt dabei auf 112°C an. Mit dieser Maßnahme sollte der Gehalt an freiem Hydrazin gesenkt werden. Nach Abkühlen auf 60°C werden 100 Teile Toluol und 440 Teile Isobutanol zugegeben. Die resultierende Lösung enthält noch 0,65 % freies Hydrazin, ist stark trüb und bildet nach einer Woche Lagerung bei Raumtemperatur ein hochviskoses Gel.

**Beispiel 2**

Es wird wie bei Vergleichsbeispiel B verfahren, aber statt Isobutanol werden 440 Teile Methylethylketon zugegeben. Die resultierende Lösung ist klar und verändert ihre Viskosität auch nach 3 Monaten Lagerung nicht. Freies Hydrazin kann gaschromatographisch nicht nachgewiesen werden.

**Patentansprüche**

1. Verfahren zur Herstellung lagerstabiler, hydrazinfreier Lösungen oder Dispersionen von organischen Hydrazinderivaten, dadurch gekennzeichnet, daß

(A) organische Verbindungen, die mehr als eine der Hydrazinolyse zugängliche Estergruppe aufweisen, mit

(B) Hydrazin und/oder Hydrazinhydrat bei Temperaturen von 50 bis 200°C in

(C) organischen Lösemitteln umgesetzt werden und das resultierende Reaktionsprodukt mit

(D) Monoketonen und/oder Monoaldehyden eines Siedebereichs (bei Normaldruck) von 30 bis 250°C

umgesetzt wird.

2. Verfahren nach Anspruch 1, dadurch gekennzeichnet, daß die organischen Verbindungen (A) Polyalkyl- und/oder Poly(hydroxyalkyl)ester von Alkanolen oder Alkandiolen mit 1 bis 4 C-Atomen sind.

3. Verfahren nach Anspruch 1 dadurch gekennzeichnet, daß als organische Verbindungen (A) Ester primärer Alkanole bzw. Alkandiole verwendet werden.

4. Verfahren nach einem der vorhergehenden Ansprüche, dadurch gekennzeichnet, daß als organische Verbindungen (A) solche eingesetzt werden, die zusätzlich mit Ammoniak und/oder Monoamin neutralisierte oder teilneutralisierte Carboxylgruppen enthalten.

5. Verfahren nach Anspruch 1, dadurch gekennzeichnet, daß als Verbindungen (A) (Meth)acrylester-(Co)-polymerisate verwendet werden.

6. Verfahren nach Anspruch 1, dadurch gekennzeichnet, daß als organische Verbindungen (A) Ester monomerer organischer Polycarbonsäuren verwendet werden.

7. Verfahren nach Anspruch 1, dadurch gekennzeichnet, daß als Verbindungen (A) Ester oligomerer und/oder polymerer höherer Fettsäuren, insbesondere oligomerer Leinölfettsäure und/oder Ricinenfettsäure, vorzugsweise solche mit Oligomerisierungsgraden von 2 bis 6, verwendet werden.

8. Verfahren nach Anspruch 1, dadurch gekennzeichnet, daß als Verbindungen (A) Polyester monomerer Polycarbonsäuren und/oder oligomerer höherer Fettsäuren verwendet werden.

9. Verfahren nach Anspruch 1, dadurch gekennzeichnet, daß als organische Verbindungen (A) lineare und/oder verzweigte Polyester verwendet werden.

10. Verfahren nach Ansprüchen 1 bis 8, dadurch gekennzeichnet, daß nach der Umsetzung mit (B) und/oder (D) weitere organische Lösemittel und/ oder Wasser zugegeben werden.

11. Verwendung der nach einem der vorhergehenden Ansprüche hergestellten Lösungen als kontinuierliche Phase einer Dispersion organischer Polymerer.

12. Verwendung der nach einem der Ansprüche 1 bis 10 hergestellten Lösungen als Vernetzungsmittel für Überzugs-, Verklebungs- und Dichtungsmittel.

## Claims

1. A process for the preparation of hydrazine-free solutions or dispersions of organic hydrazine derivatives, which solutions or dispersions have a long shelf life, wherein

(A) organic compounds which have more than one ester group capable of undergoing hydrazinolysis are reacted with

(B) hydrazine and/or hydrazine hydrate at from 50 to 200°C in

(C) organic solvents, and the resulting reaction product is reacted with

(D) monoketones and/or monoaldehydes having a boiling range (under atmospheric pressure) of from 30 to 250°C.

2. A process as claimed in claim 1, wherein the organic compounds (A) are polyalkyl and/or poly(hydroxyalkyl) esters of alkanols or alkanediols of 1 to 4 carbon atoms.

3. A process as claimed in claim 1, wherein esters of primary alkanols or alkanediols are used as organic compounds (A).

4. A process as claimed in any of the preceding claims, wherein compounds which additionally contain carboxyl groups neutralized or partially neutralized with ammonia and/or monoamine are used as organic compounds (A).

5. A process as claimed in claim 1, wherein (meth)acrylate (co)polymers are used as compounds (A).

6. A process as claimed in claim 1, wherein esters of monomeric organic polycarboxylic acids are used as organic compounds (A).

7. A process as claimed in claim 1, wherein esters of oligomeric and/or polymeric higher fatty acids, in particular oligomeric linseed oil fatty acid and/or ricinene fatty acid, preferably those having degrees of oligomerization of from 2 to 6, are used as compounds (A).

8. A process as claimed in claim 1, wherein polyesters of monomeric polycarboxyic acids and/or oligomeric higher fatty acids are used as compounds (A).

9. A process as claimed in claim 1, wherein linear and/or branched polyesters are used as compounds (A).

10. A Process as claimed in claims 1 to 8, wherein further organic solvents and/or water are added after the reaction with (B) and (D).

11. Use of the solutions prepared according to any of the preceding claims as a continuous phase of a dispersion of organic polymers.

12. Use of the solutions prepared according to any of claims 1 to 10 as crosslinking agents for coating materials, adhesives and sealants.

## Revendications

1. Procédé de préparation de dispersions ou de solutions de dérivés d'hydrazine organiques, exemptes d'hydrazine, stables à la conservation, caractérisé en ce que on fait réagir:

(A) des composés organiques qui comprennent plus d'un radical ester accessible à l'hydrazinolyse, sur

(B) de l'hydrazine et/ou de l'hydrazine hydratée à des températures de 50 a 250°C, dans

(C) des solvants organiques et le produit de la réaction ainsi obtenu sur

(D) des monocétones et/ou des monoaldéhydes d'une plage d'ébullition (à la pression normale) de 30 à 250°C.

2. Procédé suivant la revendication 1, caractérisé en ce que les composés organiques (A) sont des esters polyalkyliques et/ou poly(hydroxyalkyliques) d'alcanols ou d'alcanediols comportant de 1 à 4 atomes de carbone.

3. Procédé suivant la revendication 1, caractérisé en ce qu'à titre de composés organiques (A), on utilise des esters d'alcanols ou d'alcanediols primaires.

4. Procédé suivant l'une quelconque des revendications précédentes, caractérisé en ce qu'à titre de composés organiques (A), on en utilise du genre de ceux qui contiennent complémentairement des radicaux carboxyle neutralisés ou partiellement neutralisés avec de l'ammoniac et/ou une monoamine.

5. Procédé suivant la revendication 1, caractérisé en ce qu'à titre de composés (A) on utilise des (co)polymères d'esters (méth)acryliques.

6. Procédé suivant la revendication 1, caractérisé en ce qu'à titre de composés organiques (A) on utilise des esters d'acides polycarboxyliques organiques monomères.

7. Procédé suivant la revendication 1, caractérisé en ce qu'à titre de composés (A), on utilise des esters d'acides gras supérieurs oligomères et/ou polymères, plus particulièrement des acides linoléique et/ou ricinoléique oligomères, de préférence ceux avec des degrés d'oligomérisation de deux à six.

8. Procédé suivant la revendication 1, caractérisé en ce qu'à titre de composés (A) on utilise des polyesters d'acides polycarboxyliques monomères et/ou d'acides gras supérieurs oligomères.

9. Procédé suivant la revendication 1, caractérisé en ce qu' à titre de composés (A) on utilise des polyesters linéaires et/ou ramifiés.

10. Procédé suivant les revendications 1 à 8, caractérisé en ce que, après la réaction sur (B) et/ou (D), on ajoute de l'eau et/ou d'autres solvants organiques.

11. Utilisation des solutions préparées selon l'une quelconque des revendications précédentes, à titre de phase continue d'une dispersion de polymères organiques.

12. Utilisation des solutions selon l'une quelconque des revendications 1 à 10 à titre d'agent de réticulation pour des agents de revêtement, de collage et d'étanchéité.